# EUROPEAN PATENT APPLICATION

(11) **EP 0 654 723 A2**
(43) Date of publication of application: **24.05.1995**
(21) Application number: 94117803.0
(22) Date of filing: 11.11.1994
(51) Int. Cl.: G05D 23/02, F16L 37/10, F16L 37/12

(54) **A coupling, particularly for connecting a thermostatic body to a valve at a heating or cooling element**

(30) Priority: 24.11.1993 SE 9303892
(71) Applicant: TOUR & ANDERSSON AB, S-137 37 Västerhaninge (SE)
(72) Inventor: Lenberg, Lars, S-465 00 Nossebro (SE)
(74) Representative: Siebmanns, Hubertus

(57) **Abstract**

A coupling (1) for quick attachment of a thermostatic body (20) to a valve (3) at a heating or cooling element (2) shows a connecting part (18) with a first connecting end (19) for attachment at the thermostatic body (20) and with a second connecting end (23) for grasping around a connector (8) of said valve (3). Furthermore, there are means (31; 34) for securing the assembled position of the connecting part (18) at said connector (8), which means (31; 34) comprise eccentrical surfaces (31; 35), which are provided to become efficient when turning the coupling parts (18; 34) in relation to each other. Said other connecting end (23) of the connecting part (18) is designed as a claw shaped sleeve part with four claw parts, which are separate by axial gaps (25), and which at both axial ends are terminated by radial parts (22; 24) for co-operation with the connector (8) without play. The claw parts form together on the inside (27) a circular cylindrical surface and on the outside in the same circumferential direction eccentrically displaced outer surfaces (31) for cooperation with an outer locking ring (34) with a contour following design on the inside (35). The locking ring (34) is provided to be pressed radially inwardly by turning in relation to the claw parts in the one direction to achieve frictional locking of the other connecting end (23) of the connecting part (18) on the connector (8).

## Description

The present invention concerns a coupling, particularly for connecting a thermostatic body to a valve at a heating or cooling element, which coupling is more closely defined in the initial part of claim 1.

Areas of use of such couplings are primarily quick connection of thermostatic bodies to radiator bound valves and connection of hosing and piping without the aid of tools.

By GB-A-2 251 487, there is previously known a coupling for connecting a thermostatic body to a valve. This coupling is very complicated and space demanding with two clamping devices opposing each other, the one leg of which is guided in an eccentric groove for each leg. By turning the coupling parts in relation to each other, said clamping devices are moved roughly in radial direction outwardly and release finally an axial space for spring biased snapping in of a locking ring. Because of the great number of parts, which have to be produced separately, and their time and cost consuming assemblage as well as liability to breakdowns, such a coupling is disadvantageous. Neither does it seem to offer any substantial protection against disassembling or manipulating by unauthorized persons.

The objective of the present invention is to develop a quick coupling of the afore-mentioned kind with a considerable simplification and reduction of the number of coupling parts, at the same time as the coupling should offer great retaining safety and protection against unauthorized manipulations. The coupling shall have a practically unlimited lifetime and shall in spite of the aforementioned safety and protection be simple and fast to assemble and disassemble, respectively, by authorized personnel. It shall be able to offer the coupling at a very advantageous price and it shall further techniques in this area in various further respects.

These objectives are achieved according to the present invention in that a coupling of the initially defined kind substantially is designed as stated in the characterizing clause of claim 1.

Further characteristics of and advantages with the invention are revealed by the following specification with reference to the accompanying drawings, which represent some non-limiting embodiments of the invention.
- Fig. 1: is a side elevational view of a partially shown radiator system with a coupling according to the invention, partly in diametrical cross-section,

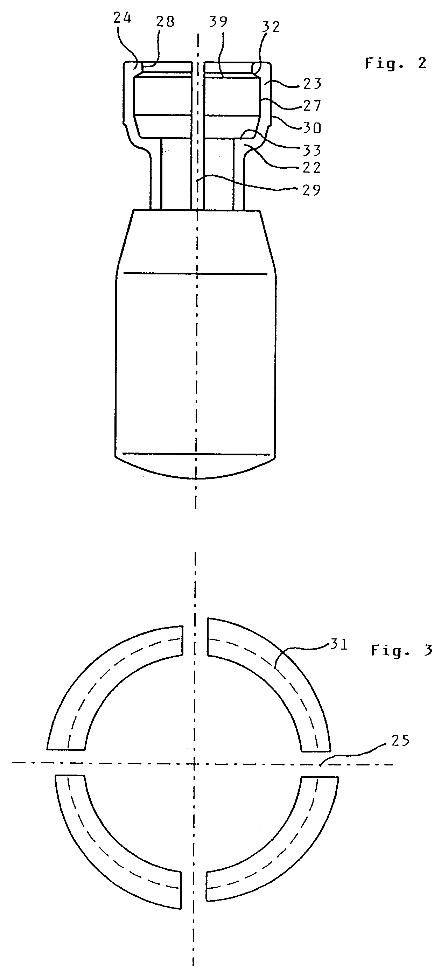

- Fig. 2: is a view corresponding to fig. 1 of a thermostatic body with a connecting coupling part,

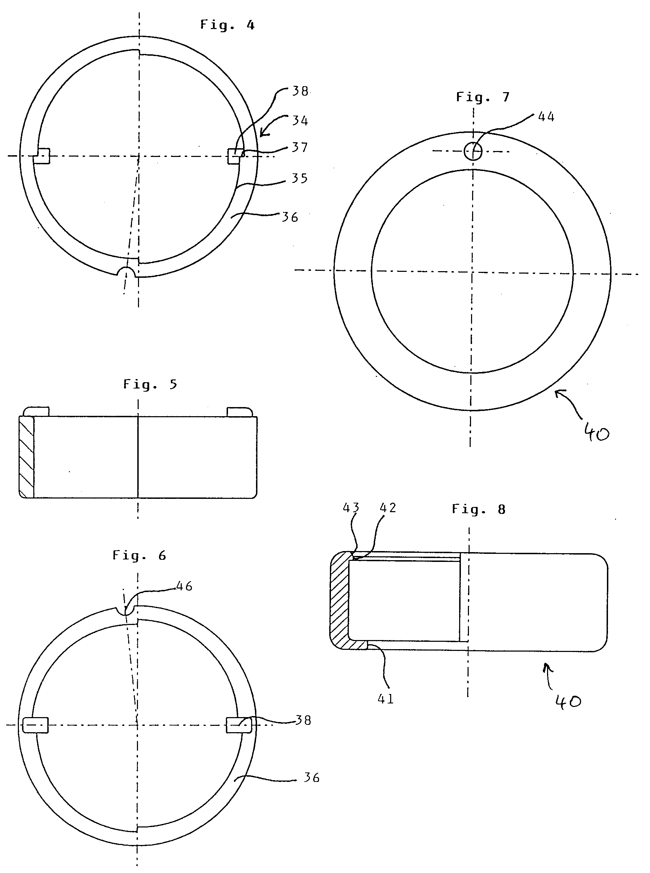

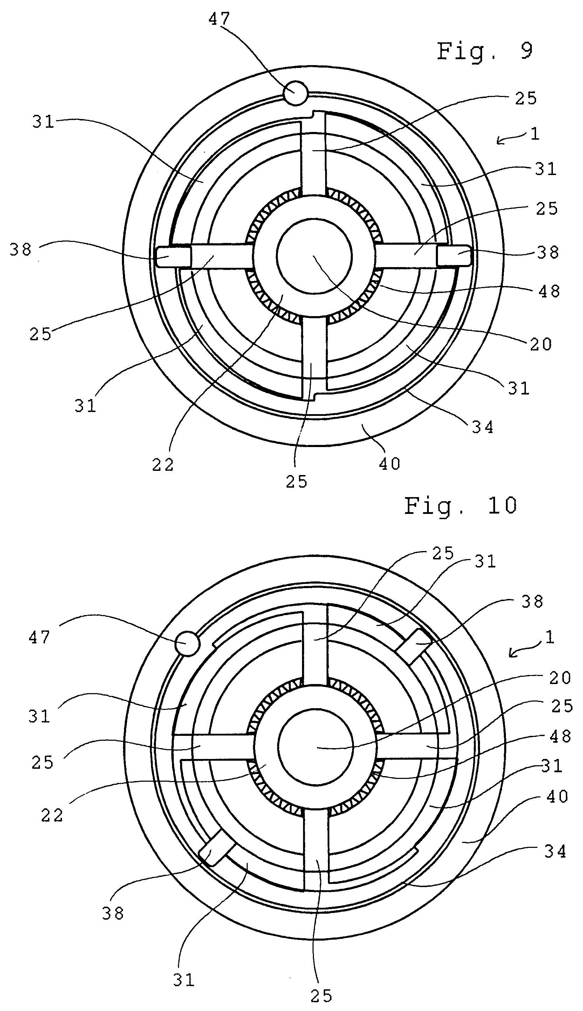

- Fig. 3: is a top plan view of the end surfaces of the coupling part shown in fig. 2,
- Fig. 4: is an end view of a locking ring forming part of the coupling,
- Fig. 5: is a side elevational view of the locking ring according to fig. 4, partly sectioned in axial direction,
- Fig. 6: is an end view of the same locking ring from the opposite direction in relation to fig. 4,
- Fig. 7: is an end view of a protection ring optionally forming part of the coupling,
- Fig. 8: is a side elevational view of the protection ring according to fig. 7 partly sectioned in axial direction and
- Fig.s. 9 and 10: are end view of the complete coupling according to the invention in assembled and locked position, respectively.

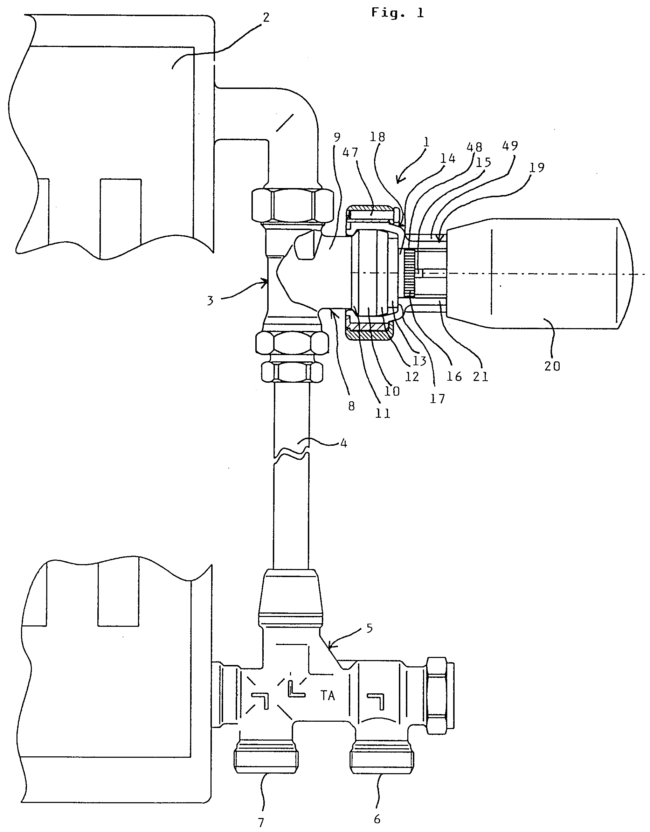

In fig. 1, a coupling according to the invention is designated by 1 in its entirety. The shown embodiment comprises a radiator 2, which on the one side is provided with a valve 3 inserted into a supply conduit 4, which emerges from a lower radiator connected distributor 5 with an inlet connector 6 and an outlet connector 7.

From valve 3 projects a connector 8 with a necklike base 9, which is enlarged towards the free connector end in a flangelike way to form a head 10 with a bevel 11 as transition. Continuing from the head 10 and towards the free end, the head converges suitably firstly via a bevel 12 to an annular step 13, which is reduced in diameter, and which terminates in an insertion part 14 with projecting actuating pin 15 and a surrounding, axially orientated grooving 16. The transition between the annular step 13 and the insertion part 14 forms an annular abutment surface 17. These parts may, of course, be designed arbitrarily depending on which kind of valve it is and which coupling design is desired, respectively.

The coupling according to the invention comprises as a first of two main parts a connecting part 18 carrying with a first connecting end 19, which is not shown in detail, a thermostatic body 20, which is shown diagrammatically only. This connecting end is, however, coherent via a radial baseplate, an uninterrupted sleeve or the like (not shown), from which emerges towards the valve 3 first of all a sleeve like neck 21 with an internal diameter corresponding to the outer diameter of the insertion part 14, which has been introduced into the neck mouth. The neck shows a corresponding internal grooving 14 as the outer grooving 16 of the insertion part 14, which groovings are to lock each other against relative twisting in assembled position. The neck connects then to a radial bottom 22, which in its turn connects to a specially designed sleeve part 23, which at its free end is terminated by a radial internal flange 24. Parts 21-24 are provided with e.g. four axial gaps 25 provided at 90° angular distance from each other and having width of 1-5 mm, preferably approximately 2,5 mm. In this way, four clawlike parts are formed with the ability to be bent structure and or material elastically both inwardly and outwardly in radial direction. The opening 26 of the neck 21, the inside 27 of the specially designed sleeve part 23 and the inside 28 of the interior flange 24 are preferably all arranged concentrically around the center axis 29 of the coupling, while the outside 30 of the specially designed sleeve part 23 forms separate eccentric, mutually uniformly designed segments 31, which are bent around axial lines, the center of curvature being provided outside the center axis 29. The curvatures are all directed in the same direction in circumferential direction of the sleeve part 23 and follow preferably an imaginary cylinder each. Instead of following the contour of a cylinder, the outsides of the segments may follow a part of a helix or the like.

According to a preferred embodiment, the transition between the inside 27 of the segments 31 and the inside 28 of the interior flange 24 is formed by a bevel 32 with the same or a somewhat steeper angle of inclination in relation to the center axis 29 compared to the bevel 11 of the head 10, at the same time as the distance between the inside 33 of the bottom 22 and the bevel 32 is the same as or preferably somewhat shorter than the distance between the abutment surface 17 and the bevel 11. In this way, there is achieved a play and tolerance free attachment of the connecting part 18 on the head 10 both in radial and axial direction with ware compensation, when the coupling is tightened by means of a locking ring 34.

While the connecting part 18 preferably is made of injection molded plastic material, the locking ring is preferably made of metal, preferably an aluminum alloy. The locking ring 34 is on the outside e.g. circular cylindrical, while its inside 35 is designed following the contour of the outside 30 of the sleeve part 23, when these two parts have been joined and are in their starting position. The inside 35 and consequently split up into segments 36, which are separated from each other by radial steps 37, which are stop means together with the axially and radially extending outer part of the basis 38 of the segments 31, whereby turning of said both parts clockwise in figs.s. 3 and 6 counted from the said initial position is efficiently avoided. On the other hand, it is possible to turn the locking ring 34 counterclockwise, whereby the segment 31 are pressed radially inwardly into solid abutment against the head 10, whereby the gaps 25 are reduced in width. In locking position, the steps 37 do preferably stay in the middle on the respective segment, so that an advantageous distribution of pressure occurs, which also is achieved uniformly by the steps 37 and the uniform mutual angular distance of 90° of several parts. It is, of course, conceivable to arrange three or five, six etc. segments with an analogous designing of the locking ring, if so desired.

The locking ring 34 may at its side, which is facing the valve, show e.g. two guiding protrusions 38, which are provided opposing each other, preferably symmetrically covering the actual associated steps 37 and protruding a short distance radially inwardly. The width of the protrusions corresponds roughly to the width of said gaps 25, so that they may be moved through to gaps when pushing on the ring. The protrusions are guided in a guiding groove 39 in the outer transitional area between the sleeve part 23 and the flange 24. The guiding groove 39 may be designed circumferential or be terminated somewhere in the middle of the segments starting from their thinnest end in order to provide in such a way a stopping means when turning the locking ring 34 counterclockwise.

Finally, the locking ring 34 may optionally be surrounded by protection ring 40, which preferably is made of plastic material and which abuts with a rear inwardly turned flange 41 the locking ring end turned from the valve, and retains the locking ring in position, while the protection ring grasps around the front end of the locking ring 34 with a frontal, likewise inwardly facing, but preferably somewhat shorter flange 42. At the mouth, this circumferential flange 42 may show a bevel 43, which facilitates pushing the protection ring on the locking ring from the rear.

If the locking ring 34 is designed with a circular cylindrical outer surface, in which case the protection ring surrounds same with a corresponding inside with sliding tolerance, it is advantageous, if both are provided with a congruent opening, e.g. designed as an axial bore 44, the one radial part 45 of which is contained in the protection ring 40, and the other radial part 46 of which is contained in the locking ring 34. In the flange 41, there is, however, contained the whole bore, as this extends longer radially inwardly. When these both opening parts complete each other to said opening, a pin 47 may be inserted into said opening preferably from the rear, so that the protection ring when turned carries with it the locking ring. In locking position of the locking ring, the said pin may be drawn out of the opening bringing about, that the protection ring may rotate without carrying with it the locking ring. In such a way, the locking position is protected as far as possible against manipulation by unauthorized persons. Authorized personnel may then at an inspection or when exchanging the thermostatic body introduce said pin in the opening again, whereupon the protection ring may be turned along with the locking ring to the initial position, in which the two rings may be withdrawn from the sleeve part 23 in the direction towards the thermostatic body, which then may be removed by moving the head along the interior flange areas under elastical bending of the segments 31 outwardly. A subsequent insertion of the head is then again achieved with elastical bending outwardly of the segment 31, which is facilitated by the bevel 12.

In fig. 1, 49 designates a protection sleeve or the like, which may surround the neck 21 of the connecting part 25. Alternatively, there may be provided ribs or the like, which cover and/or engage in the gaps 29.

It is, of course, not necessary to provide a protection ring. The locking ring is also directly effectable, which may be achieved by an outside other than a circular cylindrical one. At least some of the eccentrical surfaces cooperating with each other may be designed friction enhancing or have such a surface as known per se, so that the locking position is safeguarded to an even greater extent.

Furthermore, on the coupling parts and/or on the valve 3 and/or the thermostatic body 20, there may be provided localization means (not shown) for facilitating correct assembling.

## Claims

1. Coupling (1) particularly for connecting a thermostatic body (20) to a valve (3) at a heating or cooling element (2), comprising a connecting part (18) with a first connecting end (19) for attachment in or at the thermostatic body or the like (20) and with a second connecting end (23) for grasping around a connector (8) of said valve (3), and comprising means (31; 34) for safeguarding the attached position of the connecting part (18) at said connector (8), which means (31; 34) comprise eccentrical surfaces (31; 35), which are provided to become efficient when turning coupling parts (18; 34) in relation to each other, **characterized in that** said other connecting end (23) of the connecting part (18) is designed as claw shaped sleeve part consisting of separate claw parts with ability to be bent structure and/or material elastically both inwardly and outwardly in radial direction, which claw parts are separated by axial gaps (25), and which at both axial ends are limited by radial parts (22; 24) cooperation with the connector (8) without play, and that the claw parts on the inside (27) together form a circular cylindrical surface and on the outside in the same direction outer surfaces (31), which are eccentrically displaced, for co-operation with an outer locking ring (34) with a design following the contour on the inside (35), which locking ring (34) is provided by turning in relation to the claw parts in the one direction to be pressed radially inwardly to provide frictional locking of the other connecting end (23) of the connecting part (18) on the connector (8).

2. Coupling according to claim 1, **characterized in that** said first connecting end (19) is designed cohering via a radial baseplate, an uninterrupted sleeve or the like, from which emerges towards the valve (3) firstly a sleeve like neck (21) with an internal diameter corresponding to the outer diameter of an insertion part (14) of the connector (8) inserted in the mouth of the neck.

3. Coupling according to claim 2, **characterized in** **that** the neck (21) shows an internal grooving (48) corresponding to an external grooving (16) of the insertion part (14), which groovings are provided to lock its respective parts against relative turning movements in assembled position.

4. Coupling according to claim 2, **characterized in that** the neck (21) on its side turned away from the first connecting end connects to a radial, outwardly directed bottom (22), which in its turn connects to said claw shaped sleeve part (23), which at its free end is terminated by a radial interior flange (24).

5. Coupling according to claim 4, **characterized in that** the neck (21), the bottom (22), the sleeve part (23) and the interior flange (24) are provided with four axial gaps (25) provided at a mutual angular distance of 90° and having a width of 1-5 mm, preferably approximately 2,5 mm.

6. Coupling according to claim 4, **characterized in that** the opening (26) of the neck (21), the inside (27) of the specially designed sleeve part (23) and the inside (28) of the interior flange (24) preferably all are concentrically provided around the center axis (29) of the coupling, that the outside (30) of the specially designed sleeve part (23) forms separate, eccentrical, mutually uniformly designed segments (31) curved around axial lines, the center of curvation of which is provided outside the center axis (29), and that all curvation are orientated in the same circumferential direction of the sleeve part (23) and follow preferably an imaginary cylinder each.

7. Coupling according to claim 6, **characterized in that** the transitional part between the inside (27) of the segments (31) and the inside (28) of the interior flange (24) are formed by a bevel (32) having the same or somewhat steeper angle of inclination in relation to the center axis (29) compared with the bevel (11) of the head (10), at the same time as the distance between the inside (33) of the bottom (22) and the bevel (32) are the same as or preferably somewhat shorter than the distance between the surface of abutment (17) and the bevel (11).

8. Coupling according to any of claim 1-7, **characterized in that** the locking ring (34) outwardly is circular cylindrical, while its inside (35) is shaped following the contour of the outside (30) of the sleeve part (23), when these both parts have been joined and maintain their initial position, and/or that the inside (35) of the locking ring is split up into segments (36), which are separated by steps (37) extending in axial and radial direction, which steps constitute stopping means along with the radial outer part of the basis (38) of the segment (31) and are provided to avoid turning of said both parts from said initial position in the opposite direction in relation to the locking ring, but permit turning of the locking ring (34) in locking direction with pressing of the segment (31) radially inwardly into tight abutment against the head (10) of the connector and simultaneously reducing the width of the gaps (25).

9. Coupling according to any of claims 1-8, **characterized in that** the locking ring (34) at its side facing the valve shows e.g. two guiding protrusions (38), which are arranged opposing each other, preferably symmetrically covering the respective associated steps (37) and protruding a short distance radially inwardly, that the width of the protrusions roughly corresponds to the width of said gaps (25), so that they may be moved through to gaps when pushing on the ring, that the protrusions are guided in a guiding groove (39) in the outer transitional area between the sleeve part (23) and the flange (24), and that the guiding groove (39) is designed circumferential or terminating somewhere on the middle of the segments starting from their thinnest end to form in such a way a stopping means when turning the locking ring (34) counterclockwise.

10. Coupling according to any of claims 1-9, **characterized in that** the locking ring (34) is surrounded by a protection ring (40), preferably consisting of plastic material, which abuts with a rear inwardly directed flange (41) the locking ring end turned away from the valve and keeps the locking ring in position, while the protection ring with a frontal, likewise inwardly facing, but preferably somewhat shorter flange (42) grasps around the front end of the locking ring (34), and that at the mouth of the circumferential flange there is a bevel (43) provided to facilitate pushing on the protection ring on the locking ring, and/or that the locking ring (34) is provided with a circular cylindrical outer surface, in which case the protection ring surrounds same with a corresponding inside with slide tolerance, whereby both are provided with a congruent opening, e.g. shaped as an axial bore (44), the one radial part (45) of which is provided in the protection ring (40), and the other radial part (46) of which is provided in the locking ring (34), that the entire bore is contained in the locking ring flange (41), and that when both opening parts are completing each other to said opening, a pin (47) is provided to be inserted preferably from the rear in said opening, so that the protection ring when turned carries with it the locking ring, while in locking position the pin is withdrawable from the bore bringing about that the protection ring may rotate without carrying with it the locking ring.
